# EUROPEAN PATENT SPECIFICATION

(11) **EP 0 474 183 B1**
(45) Date of publication and mention of the grant of the patent: **06.12.2000**
(21) Application number: 91114832.8
(22) Date of filing: 03.09.1991
(51) Int. Cl.: H01M 4/58, H01M 4/02, H01M 10/40

(54) **A secondary battery or cell with a non-aqueous electrolyte**
Sekundärbatterie oder -zelle mit nichtwässrigem Elektrolyten
Batterie ou cellule secondaire à électrolyte non-aqueux

(30) Priority: 03.09.1990 JP 23351290; 17.01.1991 JP 1847791
(43) Date of publication of application: 11.03.1992
(60) Divisional application: 97110175.3
(73) Proprietor: MATSUSHITA ELECTRIC INDUSTRIAL CO., LTD., Kadoma-shi, Osaka-fu, 571 (JP)
(72) Inventor: Ozaki, Yoshiyuki, Neyagawa-shi, Osaka-fu (JP); Eda, Nobuo, Hirakata-shi, Osaka-fu (JP); Morita, Akiyoshi, Takaishi-shi, Osaka-fu (JP)
(74) Representative: Eisenführ, Speiser & Partner

(56) References cited:
- WO-A-90/13924
- PATENT ABSTRACTS OF JAPAN vol. 16, no. 236 (E-1210)29 May 1992

## Description

### FIELD OF THE INVENTION

The present invention relates to a secondary battery or cell (hereafter merely referred to as battery) with a non-aqueous electrolyte, particularly to a small-sized, light-weighted, new secondary battery.

### BACKGROUND OF THE INVENTION

Recently a tendency towards portable and cordless electronic appliances for general use has been rapidly progressing. Accordingly, a demand for a small-sized, light-weighted secondary battery having a high energy density, used for electric power supply, has been increasing. From this point of view, non-aqueous batteries, and particularly lithium secondary batteries are anticipated as batteries having high voltage and energy density and the development of these batteries is urged. Conventionally, manganese dioxide, vanadium pentaoxide, titanium disulfide and the like have been used as a cathode active material of the lithium secondary batteries. Such a battery comprises a cathode of these materials, a lithium anode and an organic electrolyte, and charge and discharge of electricity are repeated. However, in a secondary battery employing a lithium metal anode, the problems of internal short circuit caused by dendrite lithium generated upon charging or side reactions between an active material and an electrolyte are a barrier to developing secondary batteries. Further, there has not yet been found out a secondary battery with satisfactory high rate charge and discharge properties and over discharge properties.

The importance of safety of the lithium batteries has been also pointed out and in battery systems employing lithium metals or lithium alloys therein as an anode, the safety is very difficult to ensure. However, a new type of electrode active material has attracted interest, in which the intercalating reaction of stratified compounds is utilized and conventionally, intercalated graphite has been used as the electrode material for long time. Particularly an intercalated graphite stratified compound incorporating anions such as ClO₄-ion, PF₆-ion, BF₄-ion and the like is used as a cathode; and intercalated graphite incorporating cations such as Li+, Na+ and the like is supposed to be used as an anode.

However, intercalated graphite incorporating cations therein is very unstable and, in the case of using natural or artificial graphite as an anode, the battery lacks stability, and the capacity thereof is low. Further since decomposition of the electrolyte takes place, intercalated graphite cannot substitute for a lithium anode.

Lately it has been found out that cation-doping materials of pseudo graphite materials obtained by carbonization of a variety of hydrocarbon or polymeric materials are effective as an anode and can receive relatively wide application and further have excellent stability in a battery. Accordingly many researches on small-sized, light-weighted batteries with the use of these materials have been made.

However, as more carbon materials are used as an anode, it is proposed that Li-containing compounds providing higher voltage, such as LiCoO₂ or LiMn₂O₄, or a composite oxide in which a part of Co and Mn is replaced by other elements such as, for example, Fe, Co, Ni, Mn and so on, are to be used as an cathode active material.

The amount of lithium occluded and released upon using the above-mentioned pseudo graphite materials having more or less turbostratic structures as anode material was measured to have a capacity of 100 - 150 mAh/g carbon, and in addition polarization of the carbon electrode, in the course of charge and discharge, is intensified. Therefore, when these carbon anode materials are used in combination with a cathode of, for example, LiCoO₂ and so on, it is difficult to obtain a satisfactory capacity and voltage. However, it has been reported that in the case of using a high crystalline graphite material as an anode, an intercalation reaction of lithium has difficulty to progress due to the gas generated on the surface of the graphite electrode surface by the decomposition of the electrolyte upon charging. It was found that in spite of generating the gas, coke and so on that form sinter-molded at a high temperature give relatively high capacity (200 - 250 mAh/g). However, due to the expansion and contraction of the graphite in the C axis direction, in the course of electric charge and discharge, the body is swollen, so that the original shape cannot be kept. Therefore, there is a serious problem concerning the cycle property.

WO 90/13924 discloses a rechargeable battery of alkali metal, organic electrolyte type which has a low surface area particulate carbonaceous electrode intercalable with the alkali metal and experiences little capacity loss upon intercalation of the carbonaceous electrode with the alkali metal. The carbonaceous electrode may include a multi-phase composition including both highly graphitized and less graphitized phases or may include a single phase, highly graphitized composition which has been subjected to intercalation of lithium at above about 50°C. Incorporation of an electrically conductive filamentary material such as carbon black intimately interspersed with the carbonaceous composition minimizing capacity loss upon repeated cycling.

Therefore, an object of the present invention is to provide a secondary battery with non-aqueous electrolyte, having high voltage, high capacity and an excellent cycle property, by which the aforementioned conventional problems can be solved.

### SUMMARY OF THE INVENTION

The object of the present invention is achieved by a secondary battery or cell with a non-aqueous electrolyte, comprising: a cathode containing composite oxides containing lithium; a non-aqueous electrolyte; and an anode capable of being recharged repeatedly, wherein said anode comprises a carbon material, wherein said carbon material is a composite carbon material comprising carbon fibers capable of incorporating lithium ions reversibly and a graphite material, wherein said carbon fiber content is from 5 to 20% by weight and said carbon fibers are selected from vapor phase growth carbon fibers, pitch carbon fibers and polyacrylonitril carbon fibers, and wherein said said graphite material contains spherical particles.

By selecting a graphite material comprising spherical particles such as spherical cokes or meso carbon micro bead as an anode and using composite site oxide containing lithium component as a cathode, a high voltage approaching 4V and a high capacity can be obtained and the cycle property can be improved.

Generally, the uppermost limit of the content of lithium which can be intercalated chemically between the graphite layers is reported to be intercalated graphite C₆Li of the first stage, in which there is intercalated one lithium atom per 6 carbon atoms. In this case, the active material has a capacity of 372 mAh/g. When a pseudo graphite material as mentioned above is used, in comparison to lithium metal the content of lithium which can be intercalated is only small due to the undeveloped layered structure and the charge-discharge reactions progressing in a noble potential (around 1.0 V ), and therefore pseudo graphite materials are not suitable for an anodic material.

Accordingly, the inventors selected more crystallized graphite materials as an anode and reviewed their shapes to solve the above-mentioned problems. As a result, it was found that graphite materials comprising spherical particles are to be preferred as anode graphite material and spherical cokes such as fluid cokes, gilsonite cokes and so on, or meso carbon micro bead in which mesophase spheres, produced during the carbonization process of pitch, used as raw material can also be used. In any of these materials, graphitization is an important factor and the lattice spacing at 002 plane (d002) should be 3.42 Å (1Å = 0.1 nm) or less and preferably 3.40 Å or less. In the state of pseudo graphite having a d002 of 3.43 Å, the capacity is low and the polarization of the carbon electrode is intensified, in a same manner as in the other pseudo graphite materials.

Each of the carbon materials according to the present invention, comprising spherical particles, can be easily graphitized by heat treatment at a high temperature, but even through the heat treatment their original spherical shapes are maintained and only a few cracks can be found. Due to the spherical shape, flexibility with regard to the expansion and contraction of the graphite in the C axis direction can be obtained and though some gas is generated initially, intercalation and deintercalation reaction of lithium take place reversibly. These reactions proceed at a much lower potential, that is 0.05 - 0.20 V lower than in the lithium case, by which a secondary battery having high capacity and high voltage and an excellent cycle property can be obtained.

As stated above, however, in the case of using the graphite material comprising the spherical particles as an anode, although an initial capacity as high as 200-250 mAh/g can be obtained, swelling and decomposition of the anode body was sometimes observed and thus the capacity deterioration becomes large in the course of the charge-discharge cycles.

The afore-mentioned problems can be solved by using a composite carbon material comprising the graphite material mixed with carbon fibers to intensify the stiffness of the anode depolarizing mix and thus prevent the anode body from swelling and decomposing.

As one example of a carbon fiber used in the invention, a vapor phase growth carbon fiber is taken. The carbon fiber may be prepared by subjecting hydrocarbons, such as benzene, methane, propane and so on, to vapor phase heat-decomposition under the presence of catalyst base plate, made of Fe, Ni, Co and so on, in order to obtain carbon fibers deposited and grown on the base plate.

Other examples are pitch carbon fibers, made from petroleum or coal pitch as a raw material through a spinning and carbonating treatment, and PAN(polyacrylonitrile) carbon fibers made from polyacrylonitrile as a raw material, which may be used in the invention.

In the present invention, the mixture ratio between the graphite material and the carbon fiber is an important factor. The carbon fiber content of the composite carbon material is from 5 wt. % to 20 wt. %, preferably from 5 wt. % to 15 wt. % on the basis of the graphite weight.

If the content is below 5 wt. %, the addition effect is not satisfactorily exhibited and thus the charge-discharge cycle property becomes worse. Further if the content is beyond 20 wt. %, the packing density of the graphite decreases and thus the capacity of battery is reduced.

However, compounds containing lithium ions such as LiCoO₂ or LiMn₂O₄, or composite oxides in which a part of Co or Mn is displaced by other elements such as, for example, Fe, Co, Ni,Mn and so on, may be used for the cathode. In accordance with an objective composition, the composite oxides can be easily made from carbonates or oxides of lithium or cobalt as the raw materials by mixing and sintering them. Needless to say, other raw materials may be used similarly so as to prepare the composite oxide. The sintering temperature usually ranges from 650°C - 1200°C.

Any known electrolytes or separators may be used and no particular limitation is given. As is apparent from the description, according to the present invention, the graphite material comprises spherical particles and is suitable for a intercalation/deintercalation reaction because of the spherical shape. In this case, relatively few side reactions such as electrolyte decomposition take place compared to any case of other graphite materials. However, swelling of the anode body is observed in the course of the charge-discharge cycles and the resulting bad contact between the particles causes a remarkable deterioration of the capacity. According to the present invention, such a capacity deterioration can be solved by mixing and dispersing of carbon fibers to the graphite material which improves the stiffness of the depolarizing mixture and the contact between the particles.

Accordingly, the combination of the anode comprising graphite/carbon fiber composite material and the cathode comprising the Li-containing composite oxide provides a secondary battery having a high voltage and large capacity and also a superior cycle property.

### BRIEF DESCRIPTION OF THE DRAWINGS

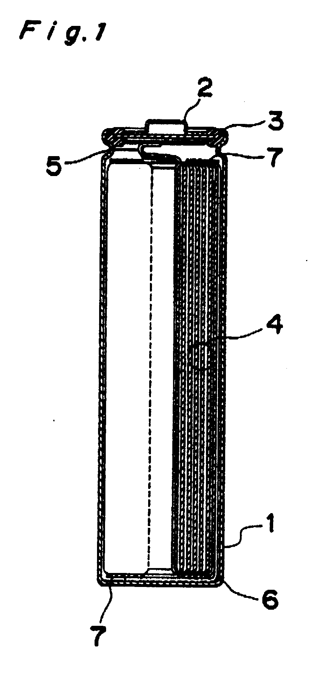

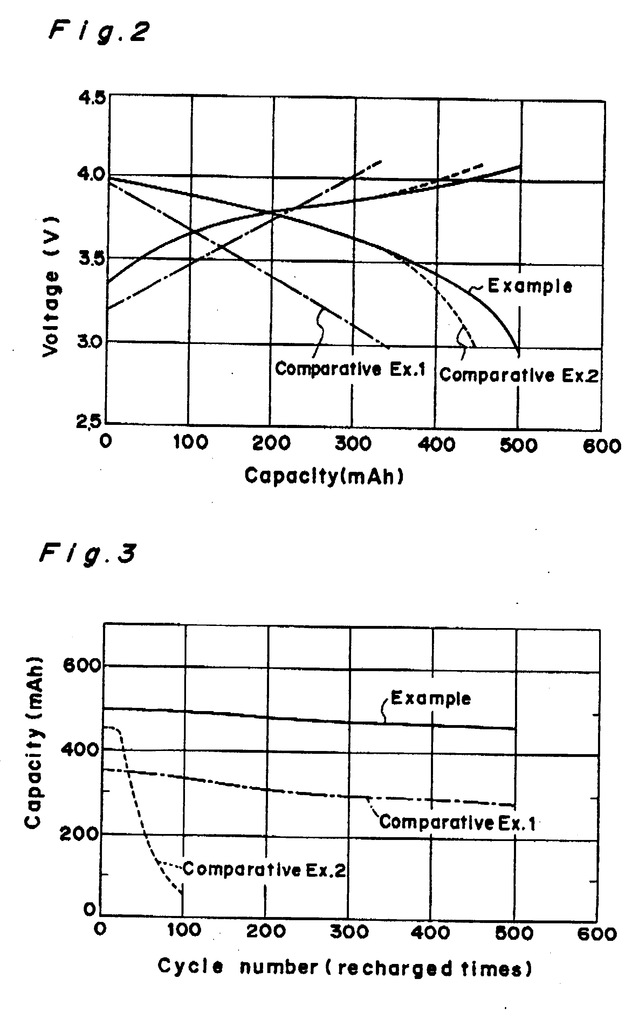

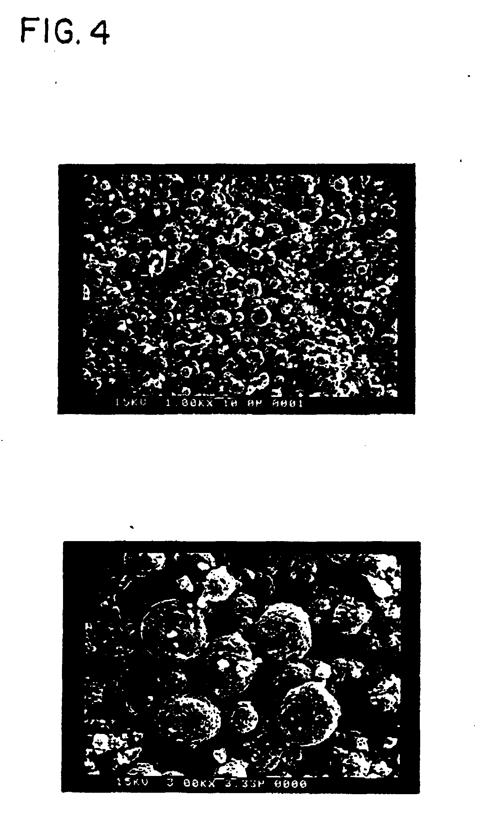

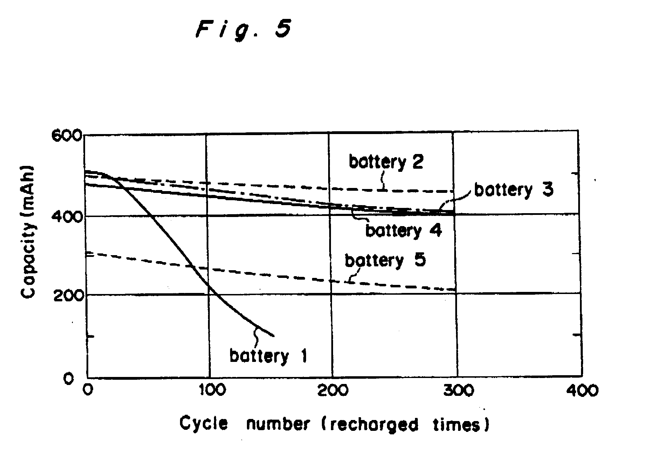

Fig.1 is a longitudinal sectional view showing a cylindrical battery according to the present invention. Fig.2 shows a comparison of the charge and discharge curves in the tenth cycle. Fig.3 shows a comparison of the cycle properties in Example 1. Fig.4 shows scanning electron microscope photographs of graphite materials comprising spherical particles. Fig.5 shows a comparison of the cycle properties in Example 2.

### DETAILED DESCRIPTION OF THE PREFERRED EMBODIMENT

The preferred embodiment of the present invention will be explained in detail.

Fig.1 shows a longitudinal sectional view of a cylindrical battery employed in the present embodiment. 1 denotes a battery case made of a stainless steel plate having organic electrolyte-proof, 2 denotes a sealing plate provided with a safety valve and 3 denotes an insulating packing. 4 is a bundle of electrode plates, in which cathode and anode are wound several times through separators to be accommodated. A cathode lead 5 is taken out of the cathode and connected to the sealing plate. An anode lead 6 is taken out of the anode and connected to the bottom of the battery case 1. 7 denotes insulating rings, each of which is provided at upper and lower sides of the bundle of electrode plates, respectively. Below the cathode and anode plates, the electrolyte and so on will be explained in detail.

### EXAMPLE 1 (not according to the invention)

The cathode is formed as follows.

100 weight parts of LiCoO₂ powder synthesized by sintering at 900 °C for ten hours after mixing Li₂Co₃ and CoCO₃, 3 wt. parts of acetylene black, 4 wt. parts of graphite and 7 wt. parts of fluorocarbon resin binder are mixed and then suspended in a carboxymethyl cellulose aqueous solution to form a paste. The paste is applied to both sides of aluminum foil of 0.03 mm thickness, dried and then rolled to form an electrode plate of 0.19 mm in thickness, 40 mm in width, 250 mm in length. The depolarizing mixture weighs 5 g.

The anode is formed as follows.

To 100 weight parts of meso carbon micro bead (d002 = 3.38 Å) heat-treated at 2800°C, 10 weight parts of fluorocarbon binder is mixed and then suspended in a carboxymethyl cellulose aqueous solution to form a paste. The paste is applied to both of copper foil of 0.02 mm thickness, dried and rolled to form an electrode plate of 0.20 mm in thickness, 40 mm in width, 260 mm in length. The depolarizing mixture weighs 2.5 g.

The leads are attached to the anode and cathode plate, respectively, and the plates are wound through a separator of 0.025 mm in thickness, 46 mm in width, 700 mm in length, made of polypropylene to be stored in a battery case of 13.5 mm in diameter and 50 mm in height. An equivalent volume of a mixed solvent of propylene carbonate ethylene carbonate, dissolving lithium perchlorate therein in the ratio of 1 mol/ℓ, is used as the electrolyte.

Before sealing the battery, charge and discharge are carried out. After the gas generated is fully deaerated under vacuum, the sealing is carried out to obtain the battery of the embodiment.

### Comparative example 1

Meso carbon micro bead (d002 = 3.55 Å) subjected to heat treatment at 1200°C is used as an anode. The other conditions of a battery in the comparative example 1 are the same as in the battery in the embodiment.

### Comparative example 2

Needle coke (d002 = 3.37 Å) subjected to heat treatment at 2800°C is used as an anode. The other conditions of a battery in the comparative example 2 are the same as in the battery in the embodiment.

### Comparative example 3

Natural crystalline graphite (d002 = 3.36 Å) is used as an anode. The other conditions of a battery in the comparative example 3 are the same as in the battery in the embodiment.

An experiment of charge and discharge at a certain current of the batteries in the example and comparative examples is carried out under the conditions of 100 mA of charge and discharge, 4.1 V of the last charge and 3.0 V of the last discharge. Fig.2 comparatively shows the charge-discharge curve in the tenth cycle. Fig.3 comparatively shows the cycle properties. Though the charge and discharge have been carried out before sealing the battery in the comparative example 3, upon charging, the safety valve was functioned as the internal pressure increased and finally the electrolyte leaked. Accordingly the battery could no longer be used and the experiment was discontinued.

As seen clearly from Fig.2, the batteries of the embodiment and the comparative example 2, in which the highly graphitized cathode materials are used, have the capacity of 450 - 500 mAh and the average voltage upon discharging is as high as 3.7 V. On the contrary, the battery of the comparative example 1, in which the non-graphitized anode material is used, has only 350 mAh. The inclination of the charging and discharging curve is steep and the average discharging voltage is as low as 3.5 V. As seen clearly from Fig.3, the cycle flatness of the battery in the example is fair and charging and discharging of more than 500 cycles is possible. On the contrary, the battery of the comparative example 2, in which needle coke is used, significantly deteriorates according to the cycles and in the 50 cycles, the capacity of the battery has reduce to half or less than the initial capacity. The battery was disassembled after the 100 cycles to observe the cathode plate. As a result, the swelling and peeling off of the mixture coating were remarkable. On the other hand, the battery of the example, in which meso carbon micro bead is used, was disassembled after the 500 cycles, but no noticeable changes in the anode plate were found out. Fig.4 shows scanning electron microscope photographs of meso carbon micro bead used in the example. Gilsonite coke and fluid coke comprise spherical particles similar to these particles.

In the present embodiment; meso carbon micro bead is used as the cathode material, but gilsonite coke, fluid coke and further a mixture thereof give the same effect.

As is clear from the above explanation, the secondary battery with non-aqueous electrolyte according to the present invention, in which the graphite materials comprising spherical particles of graphitizing carbon, employed as the anode is used in combination with the cathode comprising composite oxide containing lithium, has high voltage, high capacity and excellent cycle property.

### EXAMPLE 2

The cathode is formed as follows.

100 weight parts of LiCoO₂ powder synthesized by sintering at 900°C for ten hours after mixing Li₂Co₃ and CoCO₃, 3 wt. parts of acetylene black, 4 wt. parts of graphite and 7 wt. parts of fluorocarbon resin binder are mixed and then suspended in a carboxymethyl cellulose aqueous solution to form a paste. The paste is applied to both sides of aluminum foil of 0.03 mm in thickness, dried and rolled to form an electrode plate of 0.18 mm in thickness, 40 mm in width and 280 mm in length.

The anode is formed as follows.

Meso carbon micro bead (d002 = 3.37 Å) heat-treated at 2800°C (hereinafter referred to as MCMB) and vapor growth carbon fiber (d002 = 3.42 Å) (hereinafter referred to as VGCF) or pitch carbon fiber (d002 = 3.45 Å) are mixed in a mixture ratio shown in Table 1 to prepare a composite carbon material. To 100 weight parts of the composite carbon material, 10 weight parts of fluorocarbon resin is mixed and then suspended in a carboxymethyl cellulose aqueous solution to form a paste. The paste is applied to both of copper foil of 0.02 mm thickness, dried and rolled to form an electrode plate of 0.19 mm in thickness, 40 mm in width, 280 mm in length.

The leads are attached to the cathode and anode plate respectively, and the plates are spirally wound through a separator of 0.025 mm in thickness, 46 mm in width, 700 mm in length, made of polypropylene to be stored in the battery case of 13.5 mm in diameter and 50 mm in height. Equivalent volume mixed solvent of propylene carbonate ethylene carbonate, dissolving lithium perchlorate therein in the ratio of 1 mol/ℓ, is used as the electrolyte.

Before sealing the battery, charge and discharge are carried out. After the gas generated is fully removed under vacuum, the sealing is carried out to obtain the battery of the embodiment.

Experiment of charge and discharge at a certain current of the batteries is carried out under the conditions of 100 mA of charge and discharge, 4.1 V of the last charge and 3.0 V of the last discharge in the tenth cycle. Fig.2 comparatively shows the cycle properties.

**Table 1**

| battery No. | carbon fiber mixture ratio (%) (on the basis of MCMB weight) | carbon fiber |
|---|---|---|
| 1 | 0 | - |
| 2 | 5 | VGCF |
| 3 | 5 | pitch carbon fiber |
| 4 | 15 | VGCF |
| 5 | 25 | VGCF |

As seen clearly from Fig.5, in the case of the battery 1 including no carbon fiber, a primary capacity is as large as 500 mAh or more while a capacity detorioration becomes remarkable accompanied with charge-discharge cycles. However, in the case of the batteries 2 - 4 containing 5 to 15 wt. % of VGCF or pitch carbon fiber, it is found that a capacity deterioration is quite small while a high capacity is kept. In the case of the battery 5 containing 25 wt. % of VGCF, the capacity is quite small although the cycle property is relatively good. The reason is that VGCF dominates the carbon material and thus the depolarizing mix amount ratio therein decreases. In any cases, average discharge voltages were about 3.7 V.

Further, after the cycle of discharge in the batteries constructed under same condition as above, the tests were stopped and the batteries were decomposed to take out the anode plate thereof and observe the surface properties. As a result, in the case of battery 1, swelling and deforming of the depolarizing mix is remarkable and the original shape cannot be maintained.

On the other hand, in the case of batteries 2 to 5 including composite material mixed with carbon fibers, there is observed no noticeable charge such as swelling and deforming of the depolarizing mix and found the fact that the depolarizing mix can withstand the expansion and construction of the graphite component accompanied with the electric charge and discharge. Fig.4 shows scanning electron microscope photographs of meso carbon micro bead used in the example. It is confirmed that Gilsonite coke and fluid coke comprise spherical particles similar to these particles.

In the present embodiment, meso carbon micro bead is used as the anode material, but gilsonite coke, fluid coke and further a mixture thereof give the sane effect.

### Comparative example 4

Composite carbon material comprising natural crystalline graphite (d002 = 3.36 Å) in place of MCMB, with 5 wt. % of VGCF is used as an anode. The other conditions of a battery in the comparative example 1 are the same as in the battery in the above example 2.

### Comparative example 5

Composite carbon material comprising needle coke (d002 = 3.37 Å) applied to heat treatment at 2800°C in place of MCMB, with 5 wt. % of VGCF is used as an anode. The other conditions of a battery in the comparative example 5 are the same as in the battery in the above example 4.

The batteries according to comparative examples 4 and 5, were tested for charge-discharge examination in a same condition as the above example. In the case of the battery according to comparative example 4, gases are largely produced on the electrolyte decomposition at the primary charge and little intercalation reaction of lithium proceeds, by which only 50 mAh or less in capacity is obtained. On observing the cathode plate after the battery is charged, there is found a remarkable swelling and deforming of the depolarizing mix.

In the case of the battery according to comparative example 5, a capacity deterioration becomes remarkable in the course of the charge-discharge cycles while about 300 mAh of a primary capacity is obtained. That is to say, no effect of the composite structure with carbon fibers was found. On observing the cathode plate, there is of course found swelling and deforming of the depolarizing mix.

As is clear from the above explanation, the secondary battery with non-aqueous electrolyte according to the present invention, in which the composite carbon material comprising carbon fibers and graphite materials comprising spherical particles, employed as the anode, has a satisfactory high voltage and capacity and the excellent cycle property.

## Claims

1. A secondary battery or cell with a non-aqueous electrolyte, comprising:
a cathode (4) containing composite oxides containing lithium;
a non-aqueous electrolyte; and
an anode (4) capable of being recharged repeatedly, wherein said anode (4) comprises a carbon material,
characterized in that
said carbon material is a composite carbon material comprising carbon fibers capable of incorporating lithium ions reversibly and a graphite material,
wherein said carbon fiber content is from 5 to 20% by weight and said carbon fibers are selected from vapor phase growth carbon fibers, pitch carbon fibers and polyacrylonitril carbon fibers, and wherein said said graphite material contains spherical particles.

2. The battery or cell of claim 1, characterized in that said graphite material is meso carbon micro bead comprising mesophase spheres and said carbon fibers are vapor phase growth carbon fibers, the carbon fiber content being from 5 to 15% by weight.

## Patentansprüche

1. Sekundärbatterie oder -zelle mit einem nichtwässrigen Elektrolyten, aufweisend
eine Kathode (4), enthaltend gemischte Oxide, die Lithium enthalten;
einen nichtwässrigen Elektrolyten; und
eine Anode (4), die mehrmalig wiederaufgeladen werden kann, wobei die Anode (4) ein Kohlenstoffmaterial aufweist;
**dadurch gekennzeichnet**, daß
das Kohlenstoffmaterial ein gemischtes Kohlenstoffmaterial ist, enthaltend Kohlenstoffasern, die Lithiumionen reversibel einbauen können, sowie ein Graphitmaterial,
wobei der Gehalt an Kohlenstoffasern 5 bis 20 Gew.-% beträgt und die Kohlenstoffasern ausgewählt sind aus durch Dampfphasenwachstum erhaltene Kohlenstoffasern, Pechkohlenstoffasern und Polyacrylnitrilkohlenstoffasern und wobei das Graphitmaterial sphärische Teilchen enthält.

2. Batterie nach Anspruch 1, dadurch gekennzeichnet, daß das Graphitmaterial Mikrokügelchen aus Mesokohlenstoff ist, die Mesophasenkugeln enthalten, und die Kohlenstoffasern durch Dampfphasenwachstum erhaltene Kohlenstoffasern sind, wobei der Gehalt der Kohlenstoffasern 5 bis 15 Gew.-% beträgt.

## Revendications

1. Batterie ou cellule secondaire à électrolyte non-aqueux, comprenant :
une cathode (4) contenant des oxydes composites contenant du lithium ;
un électrolyte non-aqueux ; et
une anode (4) qui peut être rechargée de manière répétée, dans laquelle la dite anode (4) comprend un matériau à base de carbone,
caractérisé en ce que
le dit matériau à base de carbone est un matériau composite à base de carbone comprenant des fibres de carbone qui peuvent incorporer des ions de lithium de manière réversible et un matériau à base de graphite,
dans laquelle le dit contenu de fibres de carbone va de 5 à 20 % en poids et les dites fibres de carbone sont sélectionnées entre les fibres de carbone développées en phase gazeuse, les fibres de carbone à base de poix et les fibres de carbone à base de poly acrylonitrile, et dans laquelle le dit matériau à base de graphite contient des particules sphériques.

2. Batterie ou cellule selon la revendication 1, caractérisée en ce que le dit matériau à base de graphite est une micro goutte de méso carbone comprenant des sphères à mésophase et en ce que les dites fibres de carbone sont des fibres de carbone développées en phase gazeuse, le contenu de fibres de carbone étant d'environ 5 à 15 % en poids.
